# EUROPEAN PATENT APPLICATION

(11) **EP 4 653 875 A1**
(43) Date of publication of application: **26.11.2025**
(21) Application number: 25177855.1
(22) Date of filing: 21.05.2025
(51) Int. Cl.: G01N 35/04, G01N 35/10, G01N 35/00

(54) **ANALYSIS DEVICE**

(30) Priority: 24.05.2024 JP 2024084975
(71) Applicant: ARKRAY, Inc., Kyoto-shi, Kyoto 601-8045 (JP)
(72) Inventor: YAGI, Osamu, Kyoto, 602-0008 (JP); FUJIWARA, Takaaki, Kyoto, 602-0008 (JP)
(74) Representative: MFG Patentanwälte Meyer-Wildhagen Meggle-Freund Gerhard PartG mbB

(57) **Abstract**

An analysis device, includes: a device main body; a holding member that holds a specimen container movably between an approach position, which is close to the device main body, and a separation position, which is horizontally separated from the device main body; a nozzle that is supported at a front side of the device main body so as to be movable between a collection position, where the nozzle enters the specimen container at the approach position from above to collect a specimen inside the specimen container, and a retraction position, where the nozzle retracts above the specimen container; a cover that covers the nozzle, at the retraction position, at the front side; and a support member that is provided at the holding member so as to be positionally adjustable in a vertical direction and that supports the specimen container.

## Description

### BACKGROUND

### Technical Field

The present disclosure relates to an analysis device.

### Related Art

Japanese Patent Application Laid-Open (JP-A) No. 2021-105542 describes a safety device of an apparatus including a nozzle that moves in a vertical direction to enter a test tube, a holding unit that holds the test tube, and a transport mechanism that moves the test tube held by the holding unit at a holding position from the holding position to an entry position where the test tube enters the nozzle. The safety device includes a rotating body having a first portion and a second portion. When the test tube moves to the entry position, the first portion abuts on the test tube and rotates, and the second portion rotates following the first portion. As a result, at least a part of a region defined by a height from an upper end of the test tube at the entry position to a lower end of the nozzle and a width of the upper end of the test tube is covered.

In the technology described in JP-ANo. 2021-105542, a finger or the like is prevented from entering between the upper end of the test tube and the lower end of the nozzle from a horizontal direction, in a direction in which the test tube enters a descending place of the nozzle. That is, the nozzle is suppressed from coming into contact with a foreign substance such as the finger.

However, in the technology described in JP-A No. 2021-105542, the safety device includes the rotating body having the first portion and the second portion, which causes an increase in size of the device.

### SUMMARY

An analysis device, according to a first aspect of the present disclosure includes: a device main body; a holding member that holds a specimen container movably between an approach position, which is close to the device main body, and a separation position, which is horizontally separated from the device main body; a nozzle that is supported at a front side of the device main body so as to be movable between a collection position, where the nozzle enters the specimen container at the approach position from above to collect a specimen inside the specimen container, and a retraction position, where the nozzle retracts above the specimen container; a cover that covers the nozzle, at the retraction position, at the front side; and a support member that is provided at the holding member so as to be positionally adjustable in a vertical direction and that supports the specimen container.

### BRIEF DESCRIPTION OF THE DRAWINGS

Exemplary embodiments of the present disclosure will be described in detail based on the following figures, wherein:
Fig. 1 is a perspective view illustrating an analysis device according to a first embodiment.
Fig. 2 is a front view illustrating three types of specimen containers having different outer heights, which are applicable to the analysis device according to the first embodiment.
Fig. 3 is a perspective view illustrating a holding member and the vicinity thereof of the analysis device according to the first embodiment.
Fig. 4 is an exploded perspective view illustrating the inside of the holding member of the analysis device according to the first embodiment.
Fig. 5 is a cross-sectional view illustrating the holding member, a nozzle, and the vicinity thereof of the analysis device according to the first embodiment.
Fig. 6 is a cross-sectional view illustrating the holding member, the nozzle, and the vicinity thereof of the analysis device according to the first embodiment in a state in which a height position of a specimen container is being adjusted.
Fig. 7 is a cross-sectional view illustrating the holding member, the nozzle, and the vicinity thereof of the analysis device according to the first embodiment in a state where the specimen container is at a separation position.
Fig. 8 is a cross-sectional view illustrating the holding member, the nozzle, and the vicinity thereof of the analysis device according to the first embodiment in a state where the specimen container is at an approach position.
Fig. 9 is a cross-sectional view illustrating the holding member, the nozzle, and the vicinity thereof of the analysis device according to the first embodiment in a state where the nozzle is at a collection position.
Fig. 10 is a cross-sectional view illustrating the holding member, the nozzle, and the vicinity thereof of the analysis device according to the first embodiment in a state where the specimen container is at the approach position.
Fig. 11 is a cross-sectional view illustrating the holding member, the nozzle, and the vicinity thereof of the analysis device according to the first embodiment in a state where the specimen container is at the approach position.
Fig. 12 is a cross-sectional view illustrating a holding member, a nozzle, and the vicinity thereof of an analysis device according to a second embodiment.
Fig. 13 is a cross-sectional view illustrating a holding member, a nozzle, and the vicinity thereof of an analysis device according to a comparative example.

### DETAILED DESCRIPTION

Hereinafter, an example of a mode for carrying out the technology of the present disclosure will be described in detail with reference to the drawings. Note that components and processes having the same operation, action, and function are denoted by the same reference numerals throughout the drawings, and redundant description may be omitted as appropriate. Each drawing is only schematically illustrated to the extent that the technology of the disclosure can be sufficiently understood. Therefore, the technology of the disclosure is not limited only to the illustrated example. Furthermore, in the present embodiment, description of configurations that are not directly related to the disclosure or well-known configurations may be omitted.

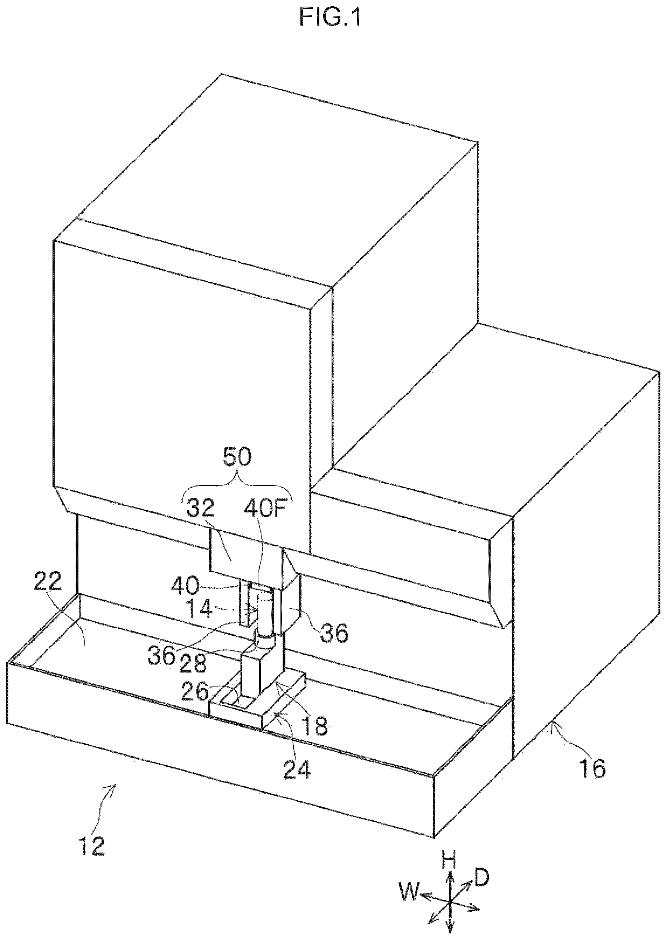

Fig. 1 illustrates an analysis device 12 of a first embodiment. In the drawings, a width direction, a depth direction, and a height direction of the analysis device 12 are indicated by an arrow W, an arrow D, and an arrow H, respectively. The analysis device 12 is used in a posture in which the width direction and the depth direction are a horizontal direction.

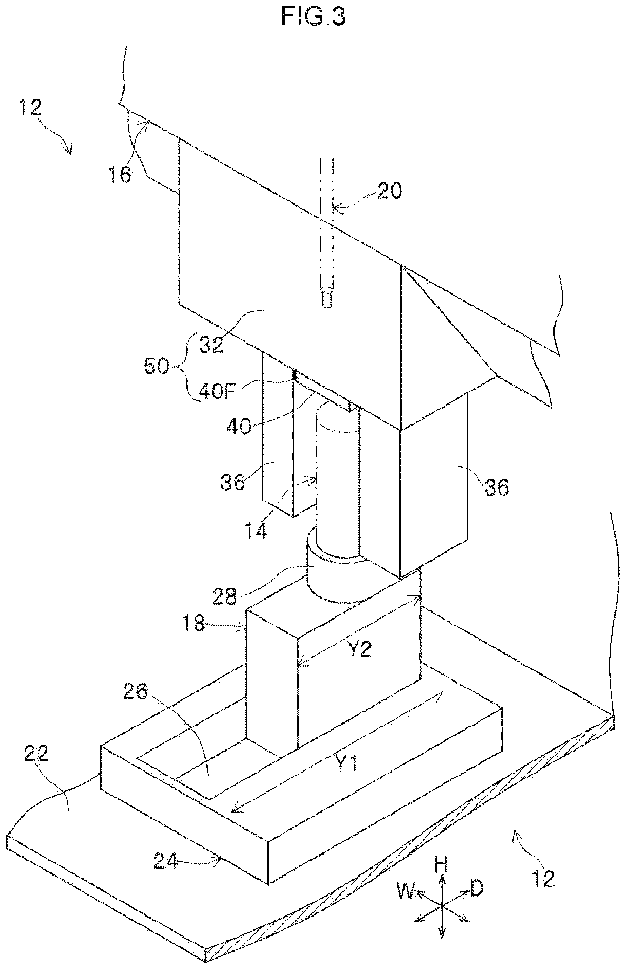

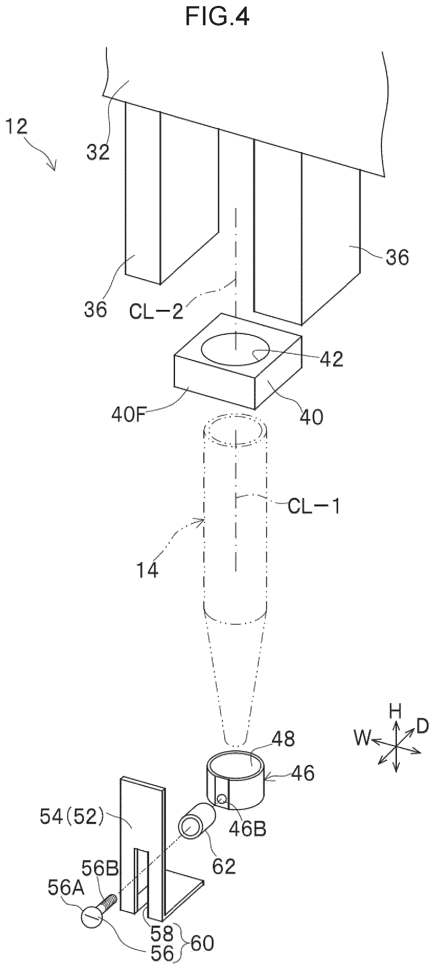

The analysis device 12 is a device that sucks a specimen liquid (for example, urine) contained in a specimen container 14 by a nozzle 20 to be described later and analyzes the specimen liquid. The specimen container 14 has a cylindrical shape, as a whole, in examples illustrated in Figs. 3 and 4, but a diameter thereof gradually decreases in a conical shape from an intermediate portion toward a lower end. The specimen container having such a shape may be referred to as a Spitz tube. The specimen container according to the disclosed technology is not limited to the Spitz tube. For example, a container having a cylindrical shape as a whole and a hemispherical lower end portion (so-called round bottomed test tube), a container having a cylindrical shape as a whole and a circular lower end portion (so-called flat bottomed test tube), or the like may be used.

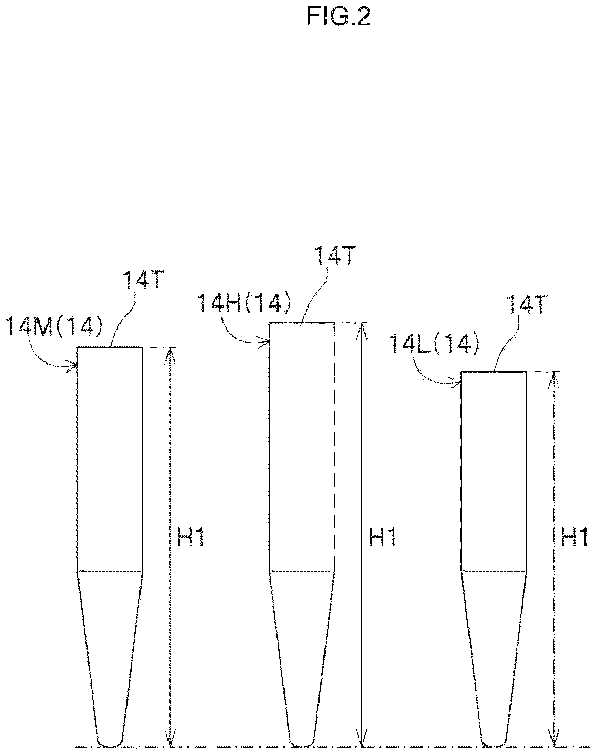

In the disclosed technology, as illustrated in Fig. 2, there are a plurality of types of specimen containers 14 applied to the analysis device 12, each having a different outer height H1. In Fig. 2, among the plurality of types of specimen containers 14 having different outer heights H1 as described above, a specimen container 14M having an approximately medium outer height H1, a specimen container 14H having a relatively high outer height H1, and a specimen container 14L having a relatively low outer height H1 (three types of specimen containers) are illustrated.

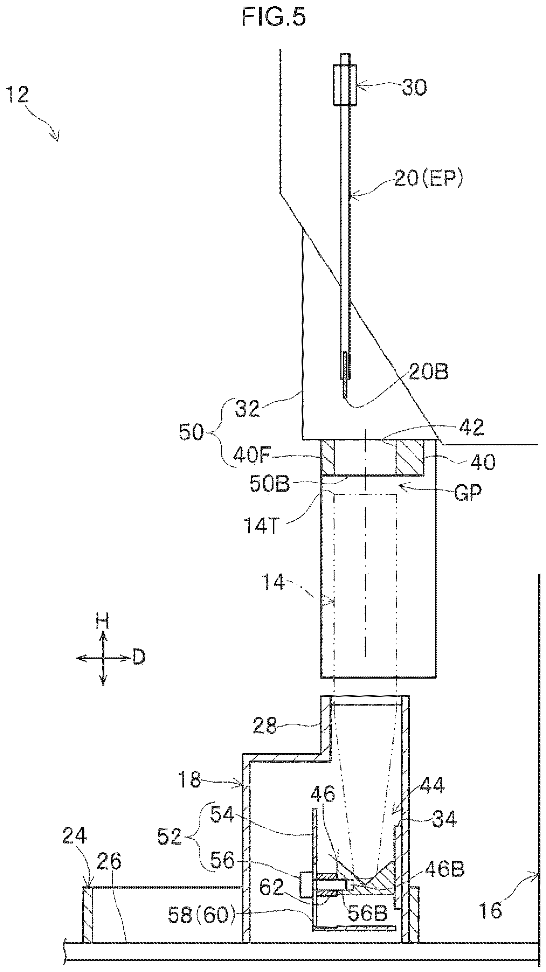

The analysis device 12 includes a device main body 16, a holding member 18, and a nozzle 20 (see Figs. 3 and 5). Various devices and members for analyzing the specimen liquid are mounted on the device main body 16.

As illustrated in Fig. 1, a stage 22 is provided on the front side of the device main body 16. The stage 22 extends in the width direction of the device main body 16. A frame member 24 is mounted on the stage 22. A slide recess 26 is formed in the frame member 24. When viewed from above, the slide recess 26 is located at the center in the width direction of the frame member 24 and has a rectangular shape extending in the depth direction.

The holding member 18 is housed in the slide recess 26. The holding member 18 is a substantially box-shaped member having a hollow inside. A holding cylinder 28 is formed in the holding member 18. The specimen container 14 can be held from the periphery by the holding cylinder 28.

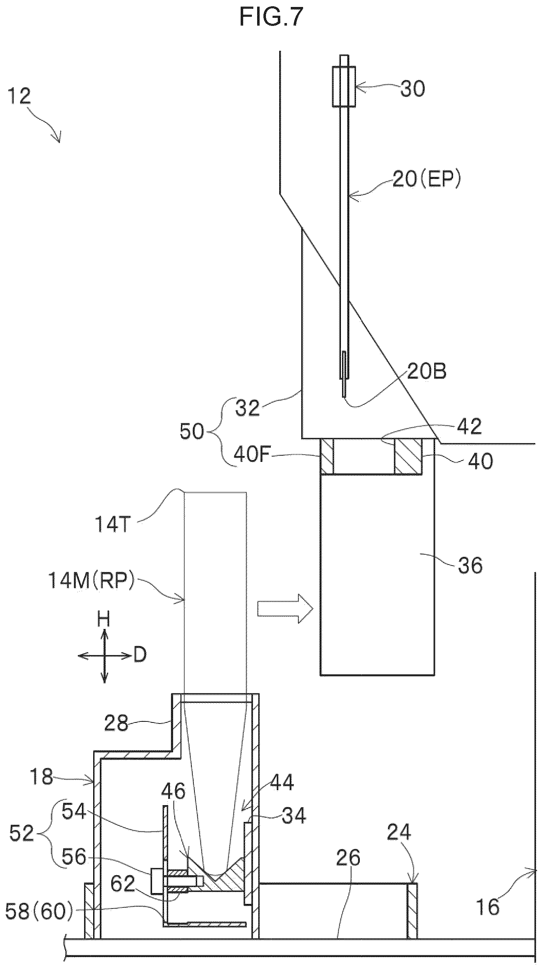

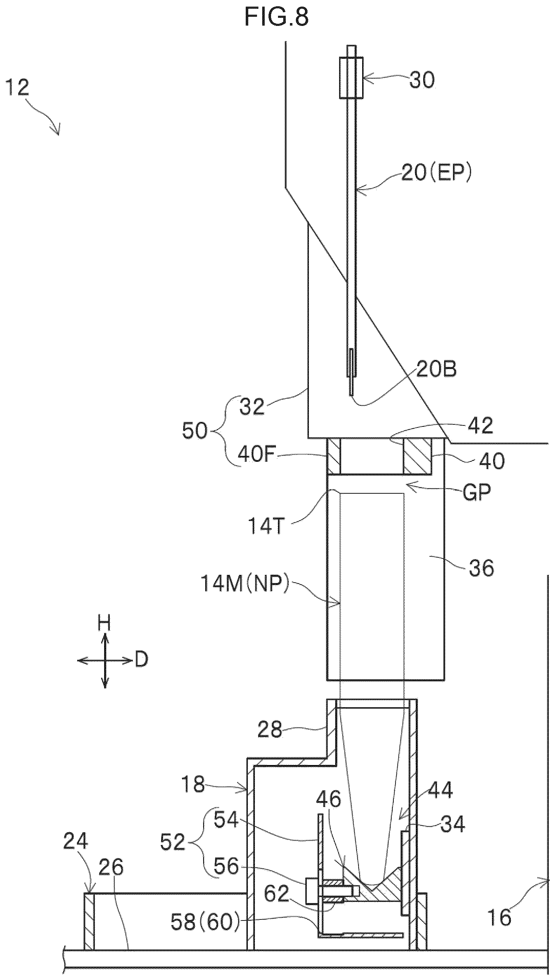

An outer depth Y2 of the holding member 18 is shorter than an inner depth Y1 of the slide recess 26. Therefore, the holding member 18 can move (slide) in the depth direction, that is, in the horizontal direction while maintaining a state of being housed in the slide recess 26 on the stage 22. As the holding member 18 moves in this manner, the specimen container 14 moves between an approach position NP (see Fig. 8) and a separation position RP (see Fig. 7). The specimen container 14 is relatively close to the device main body 16 at the approach position NP, and is at a position relatively horizontally separated from the device main body 16 at the separation position RP.

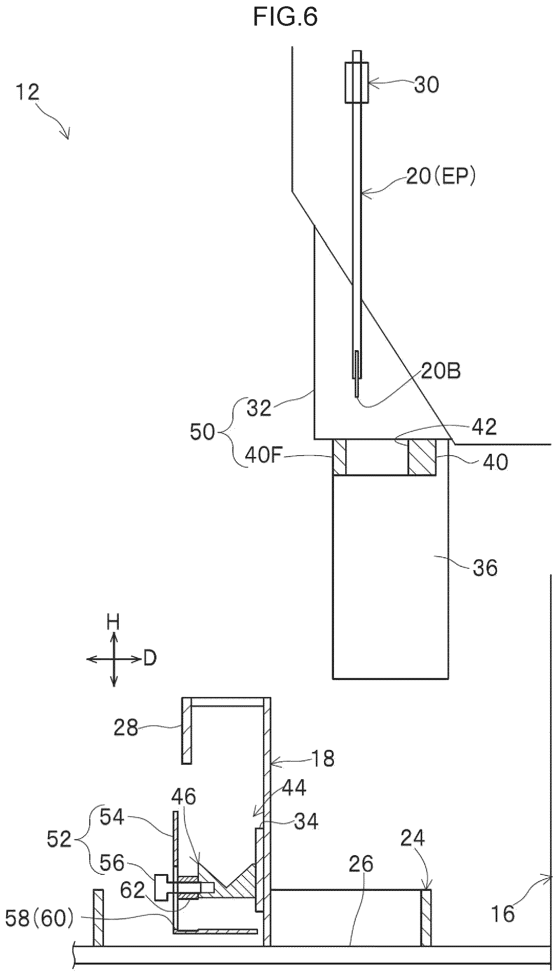

As illustrated in Fig. 6, in the holding member 18, at least a part on the front side is removable from the other part. As an example, Fig. 6 illustrates a configuration in which a substantially half portion of the holding member 18 on the front side is removed from a portion on the back side. By removing a part of the holding member 18 on the front side from the other part of the holding member 18 as described above, a worker can access a fixing member 52 described later from the front side. Note that the fixing member 52 may be exposed by removing the entire holding member 18 from the slide recess 26 instead of a part of the holding member 18 on the front side.

The nozzle 20 is disposed in the device main body 16. As illustrated in Fig. 5, the nozzle 20 is supported at a position on the front side inside the device main body 16 so as to be movable up and down by an elevation mechanism 30.

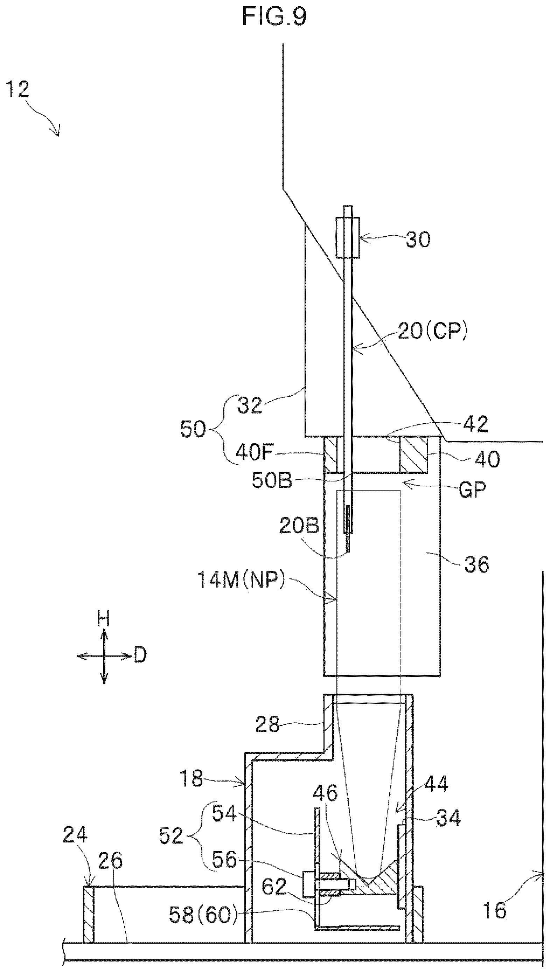

As illustrated in Fig. 9, a position where a lower end 20B of the nozzle 20 enters the specimen container 14 at the approach position NP from above is a collection position CP of the nozzle 20. The nozzle 20 can collect the specimen inside the specimen container 14 in a state of being at the collection position CP.

As illustrated in Fig. 8, a position where the lower end 20B of the nozzle 20 does not enter the specimen container 14 from above and is retracted upward is a retraction position EP of the nozzle 20. In a state where the nozzle 20 is at the retraction position EP, the specimen container 14 and the nozzle 20 do not come into contact with each other even if the specimen container 14 moves in the depth direction.

An extension plate 32 is provided on the front side of the device main body 16. The extension plate 32 extends downward from the center of the device main body 16 in the width direction. The extension plate 32 covers the nozzle 20 at the retraction position EP on the front side.

A pair of side walls 36 extends downward from the extension plate 32. The pair of side walls 36 is arranged in parallel to be separated in the width direction. A space between the side walls 36 is opened to the front side and the lower side.

A block 40 is fixed between the side walls 36. The block 40 is a rectangular parallelepiped member having a predetermined thickness. In a plan view, a through hole 42 penetrating the block 40 in the vertical direction is formed in the block 40. As illustrated in Figs. 4 and 5, a center line CL-1 of the specimen container 14 at the approach position NP is substantially matched with a center line CL-2 of the through hole 42.

In the block 40, a portion located in front of the nozzle 20 is a front portion 40F. The front portion 40F covers the nozzle 20 at the retraction position EP on the front side. That is, the extension plate 32 and the front portion 40F of the block 40 cover the nozzle 20 at the retraction position EP on the front side, and form the cover 50 of the disclosed technology.

A portion that is lower than the holding cylinder 28 is a housing recess 44 that is inside the holding member 18. A support member 46 is housed in the housing recess 44. The support member 46 is formed in a columnar shape. A height H2 (outer dimension) of the support member 46 is shorter than a height H1 (inner dimension) of the housing recess 44. Therefore, the support member 46 is movable in the vertical direction in a state of being housed in the housing recess 44.

A top surface of the support member 46 is a support surface 48. The support surface 48 supports the specimen container 14 held by the holding member 18 from below. In the analysis device 12 of the present embodiment, as illustrated in Fig. 5, the support surface 48 is inclined downward toward the center. It can also be said that the support surface 48 has an inverted conical shape.

The fixing member 52 is provided in front of the housing recess 44 inside the holding member 18. The fixing member 52 includes a fixing plate 54 and a fixing screw 56. A long hole 58 extending in the vertical direction is formed in the fixing plate 54. A hole width W1 of the long hole 58 is smaller than a diameter of a fixing screw head 56A of the fixing screw 56 and larger than a diameter of a male screw 56B. The fixing screw 56 is inserted into the long hole 58 from the front side. The fixing screw 56 can be positionally changed in the vertical direction in a range of the long hole 58.

A female screw 46B corresponding to the male screw 56B of the fixing screw 56 is formed on an outer circumferential surface of the support member 46. By screwing the male screw 56B of the fixing screw 56 into the female screw 46B of the support member 46, the support member 46 can be pushed toward the back side.

A clamping wall 34 is formed on the back side of the housing recess 44. As illustrated in Fig. 7, the clamping wall 34 forms a part of the holding member 18. By screwing the male screw 56B of the fixing screw 56 into the female screw 46B of the support member 46, the support member 46 is pushed into the back side and pressed against the clamping wall 34. The fixing screw 56 clamps the support member 46 with the clamping wall 34. That is, the support member 46 is fixed to the holding member 18 at a predetermined height position. The fixing screw 56 is positionally changeable in the vertical direction within the range of the long hole 58, so that the support member 46 can be fixed at any position within this range.

However, as illustrated in Fig. 6, the support member 46 is not pushed into the back side by loosening the screwing of the fixing screw 56. The support member 46 is not pressed against the clamping wall 34 and is not clamped between the fixing screw 56 and the clamping wall 34. In this state, the support member 46 can be moved in the vertical direction.

Even if the screwing of the fixing screw 56 is loosened as described above, the male screw 56B of the fixing screw 56 maintains a state of being inserted into the long hole 58 of the fixing plate 54. Therefore, the fixing screw 56 and the support member 46 are not inadvertently detached from the fixing plate 54. In this state, by moving the fixing screw 56 in the vertical direction, it is possible to vertically move the support member 46 along the long hole 58. That is, the long hole 58 and the fixing screw 56 form a guide member 60 that guides the support member 46 in the vertical direction with respect to the holding member 18.

A collar 62 is disposed between the fixing plate 54 and the support member 46. The collar 62 is a cylindrical member and is attached to the male screw 56B. The collar 62 enables the fixing plate 54 and the support member 46 to maintain a certain interval or more.

Next, functions of the present embodiment will be described.

As illustrated in Fig. 2, the analysis device 12 of the present embodiment can cope with all specimen containers 14 having any outer height H1 among a plurality of types of specimen containers 14 having different outer heights H1. Hereinafter, first, a case of corresponding to the specimen container 14M having an approximately medium height will be exemplified.

The analysis device 12 of the present embodiment includes the holding member 18 and the support member 46. As illustrated in Fig. 6, the support member 46 is moved in the vertical direction to adjust the height position by loosening the screwing of the fixing screw 56 in a state where the holding member 18 is moved to the front side. This height position is adjusted so that a gap GP in the vertical direction between the bottom surface 50B of the cover 50 (the front portion of the block 40) and an upper end 14T of the specimen container 14M is within a predetermined range in accordance with the outer height H1 of the specimen container 14 held by the holding member 18. For example, the predetermined range is set to be small enough to prevent a foreign substance from entering the gap GP.

When the vertical position of the support member 46 is adjusted, the holding member 18 moves to the front side. Since the support member 46 is also moved to the front side, it is easy to adjust the vertical position of the support member 46 as compared with a configuration in which the support member 46 is on the back side.

As described above, in a state where the height position of the support member 46 is adjusted, as illustrated in Fig. 7, the specimen container 14M can be set on the holding member 18. The specimen container 14M is at the separation position RP, is held from the side surface side by the holding member 18, and is supported from the lower side by the support member 46. In this state, the nozzle 20 is at the retraction position EP.

In this state, as illustrated in Fig. 8, the specimen container 14M can be moved to the approach position NP by pushing the holding member 18 toward the back side. Then, as illustrated in Fig. 9, the nozzle 20 can be lowered with respect to the specimen container 14M at the approach position NP. The lowered nozzle 20 enters the specimen container 14M from above. In a state where the nozzle 20 is at the collection position CP, the nozzle 20 can collect the specimen inside the specimen container 14M.

In the analysis device 12 of the present embodiment, in the operation of moving the specimen container 14M from the separation position RP to the approach position NP (that is, pushing the holding member 18 toward the back side) and in the state where the specimen container 14M is at the approach position NP, it is possible to suppress entry of a foreign substance between the lower end 20B of the nozzle 20 and the upper end 14T of the specimen container 14M.

Specifically, the height position of the support member 46 is adjusted corresponding to the height H1 of the specimen container 14M, and the gap GP in the vertical direction between the bottom surface 50B of the cover 50 and the upper end 14T of the specimen container 14M is within a predetermined range. The support member 46 is fixed to the holding member 18 at this height position.

In this state, the holding member 18 is pushed toward the back side, and the specimen container 14M is moved from the separation position RP to the approach position NP. Since the height position of the specimen container 14M is a height position where the predetermined gap GP in the vertical direction is generated between the bottom surface 50B of the cover 50 and the upper end of the specimen container 14, the specimen container 14M moves to the approach position NP without coming into contact with the block 40. In addition, a foreign substance is suppressed from entering between the lower end 20B of the nozzle 20 and the upper end 14T of the specimen container 14M during the movement of the specimen container 14.

The front side of the nozzle 20 is covered with the cover 50. Therefore, in a state where the specimen container 14M is at the approach position NP, it is possible to suppress entry of a foreign substance from the front side between the lower end 20B of the nozzle 20 and the upper end 14T of the specimen container 14M. Since it is not necessary to provide a safety device or the like for suppressing the entry of the foreign substance in the device main body 16, the analysis device 12 can have a small configuration.

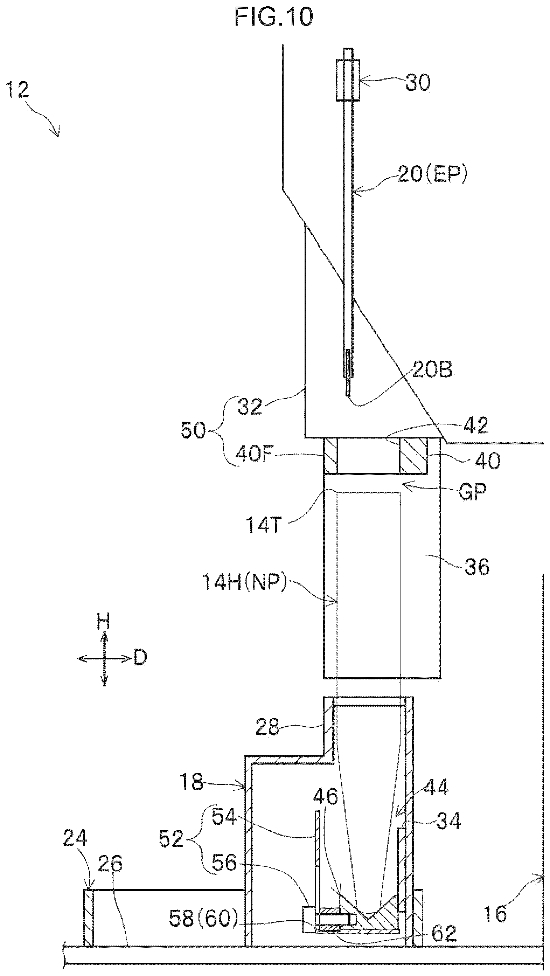

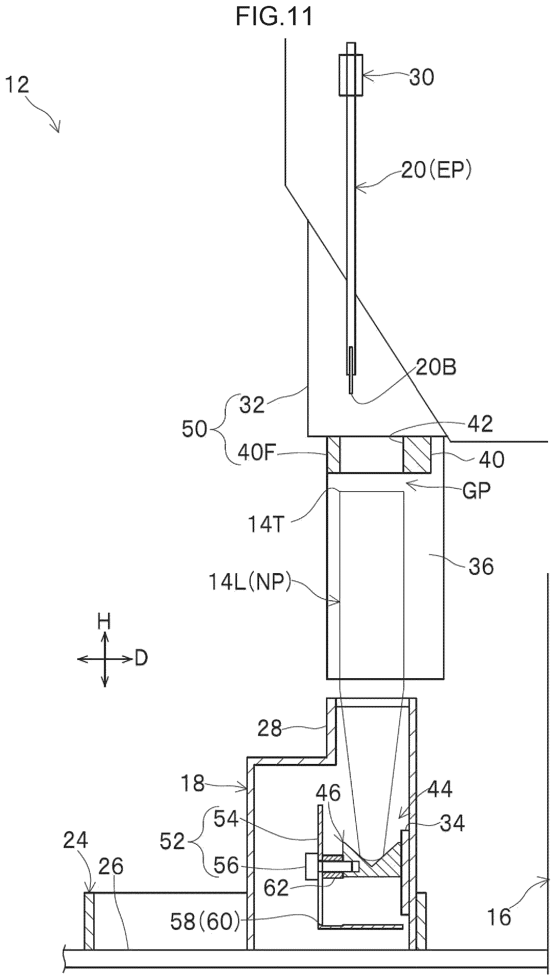

As illustrated in Figs. 10 and 11, the analysis device 12 according to the disclosed technology can realize a structure capable of suppressing the entry of the foreign substance between the lower end 20B of the nozzle 20 and the upper end 14T of the specimen container 14, regardless of the outer height H1 of the specimen container 14.

An example illustrated in Fig. 10 is a case in which the outer height H1 corresponds to the specimen container 14H higher than the specimen container 14M. In a case in which the specimen container 14H is set in the holding member 18, the support member 46 is fixed at a lower position as compared with a case of the specimen container 14M described above. More specifically, the position of the support member 46 is a position where the gap GP in the vertical direction between the bottom surface 50B of the cover 50 and the upper end 14T of the specimen container 14 is within a predetermined range as described above.

In addition, an example illustrated in Fig. 11 is a case in which the outer height H1 corresponds to the specimen container 14L lower than the specimen container 14M. In a case in which the specimen container 14L is set in the holding member 18, the support member 46 is fixed at a higher position as compared with a case of the specimen container 14M described above. More specifically, the position of the support member 46 is a position where the gap GP in the vertical direction between the bottom surface 50B of the cover 50 and the upper end 14T of the specimen container 14 is within a predetermined range as described above.

As described above, even in the specimen containers 14 having different outer heights H1, it is possible to set the gap GP within a predetermined range in the operation of moving the specimen container 14 from the separation position RP to the approach position NP and in the state where the specimen container 14M is at the approach position NP. As a result, it is possible to suppress entry of a foreign substance between the lower end 20B of the nozzle 20 and the upper end 14T of the specimen container 14. Since it is possible to suppress the foreign substance from coming into contact with the nozzle 20, it is also possible to suppress an influence of the foreign substance on the operation of the analysis device 12. Since it is not necessary to provide a safety device or the like for suppressing the entry of the foreign substance in the device main body 16, the analysis device 12 can have a small configuration. In addition, since the safety device or the like for suppressing the entry of the foreign substance is not provided in the device main body 16, the overall appearance of the analysis device 12 is not affected.

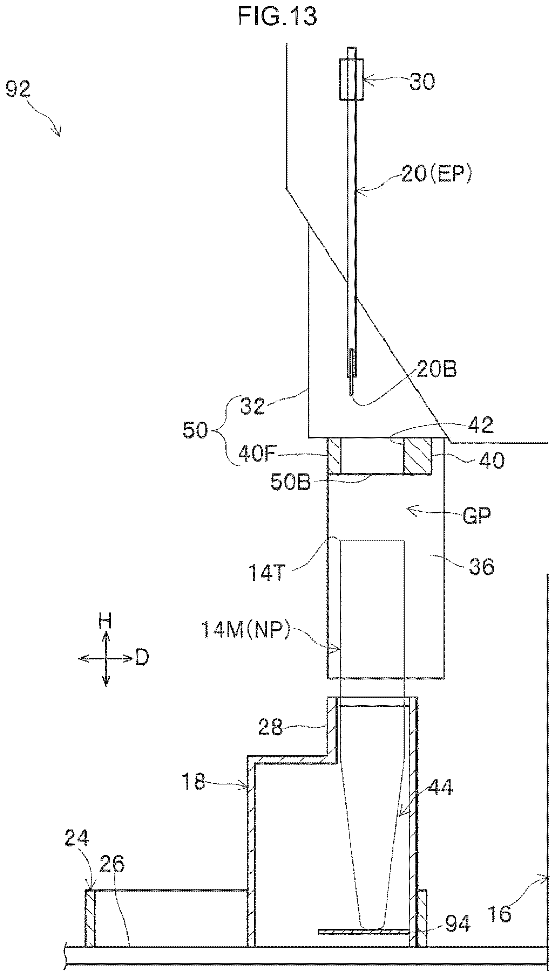

Here, Fig. 13 illustrates a holding member, a nozzle, and the vicinity thereof in a analysis device 92 according to a comparative example. In Fig. 13, elements similar to those of the analysis device 12 according to the first embodiment are denoted by the same reference numerals.

In the analysis device 92 of the comparative example, the support member 46 is not provided inside the holding member 18, and a support plate 94 is provided. The support plate 94 is fixed to the holding member 18, and the height position thereof cannot be adjusted. Therefore, in the analysis device of the comparative example, depending on the outer height H1 of the specimen container 14, the gap GP in the vertical direction between the bottom surface 50B of the cover 50 and the upper end 14T of the specimen container 14 is wider as compared with the case of the analysis device 12 of the first embodiment.

Next, a second embodiment will be described. In the second embodiment, elements, members, and the like similar to those in the first embodiment are denoted by the same reference numerals as those in the first embodiment, and a detailed description thereof will be omitted. In addition, since an overall configuration of an analysis device of the second embodiment is similar to that of the analysis device 12 of the first embodiment, illustration thereof is omitted.

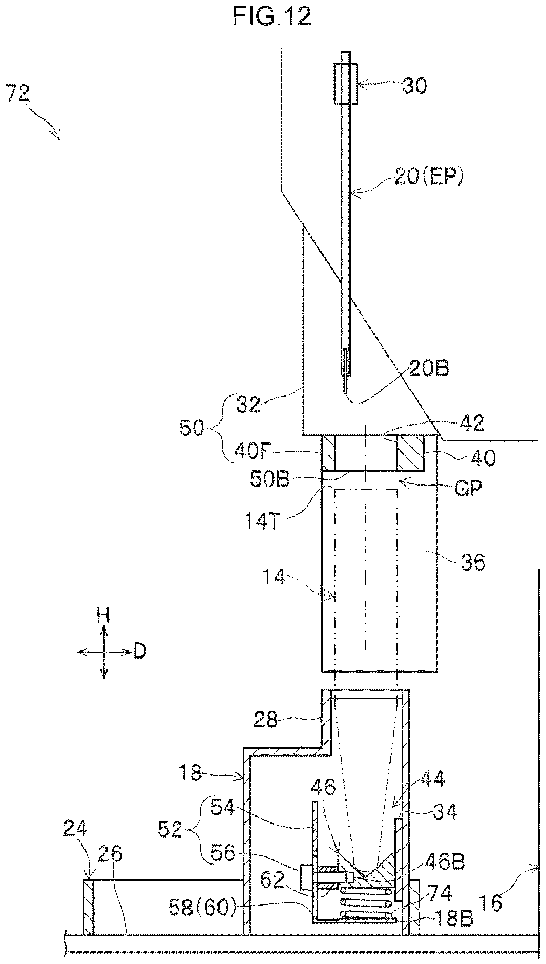

In an analysis device 72 of the second embodiment, as illustrated in Fig. 12, a spring 74 is disposed between a bottom plate 18B of a holding member 18 and a support member 46. The spring 74 biases the support member 46 upward. However, the biasing force of the spring 74 is set to such an extent as not to excessively move the support member 46 upward and to assist the upward movement when a worker adjusts the height position of the support member 46.

Therefore, in the analysis device 72 of the second embodiment, the worker can easily adjust the height position of the support member 46.

The analysis device of each of the above embodiments includes the fixing member 52. The support member 46 can be fixed at a predetermined vertical position by the fixing member 52. As an analysis device of the disclosed technology, for example, a structure in which the support member 46 is simply supported on another support table or the like without having the fixing member 52 may be adopted. However, in this case, since the support member 46 is not fixed, there is a risk that the support member may rattle vertically on the support table. By having the fixing member 52 as in the present embodiment, the support member 46 can be fixed to the holding member 18, and rattling in the vertical direction can be eliminated.

The fixing member 52 of the analysis device of each embodiment includes the male screw 56B and the clamping wall 34. Therefore, the support member 46 can be pressed against the clamping wall 34 and fixed to the holding member 18 at a predetermined vertical position by a simple work of simply screwing the male screw 56B into the female screw 46B of the support member 46.

The analysis device of each embodiment includes the guide member 60. The guide member 60 includes the long hole 58 and the male screw 56B. The guide member 60 allows the support member 46 to be smoothly guided in the vertical direction to change the vertical position. In addition, the vertical position of the support member 46 can be set in a continuous range in which the male screw 56B moves in the long hole 58.

In the analysis device of each embodiment, the support member 46 has the support surface 48. The support surface 48 is inclined downward toward the center when viewed from above. On the support surface 48, the specimen container 14 moves to the center by receiving gravity. That is, a structure for supporting the specimen container 14 at the center of the support surface 48 can be realized.

In the technology of the disclosure, the interval (length in the vertical direction) of the gap GP can be set in accordance with the size of the foreign substance assumed to enter between the lower end 20B of the nozzle 20 and the upper end 14T of the specimen container 14. For example, by setting this interval to 3 mm, it is possible to suppress the entry of the foreign substance between the lower end 20B of the nozzle 20 and the upper end 14T of the specimen container 14 and to easily adjust the position of the specimen container 14 in the vertical direction. By setting this interval to be narrower, for example, 1 mm, entry of a smaller foreign substance can be suppressed as compared with a case in which the interval is set to 3 mm. In addition, by setting this interval to be wider, for example, 5 mm, the accuracy of the position adjustment of the specimen container 14 in the vertical direction can be moderated as compared with the case in which the interval is set to 3 mm.

An object of the present disclosure is to obtain an analysis device capable of suppressing a nozzle from coming into contact with a foreign substance with a small configuration.

In the technology of the disclosure, it is possible to obtain an analysis device capable of suppressing a nozzle from coming into contact with a foreign substance with a small configuration.

## Claims

1. An analysis device(12), comprising:
a device main body(16);
a holding member(18) that holds a specimen container movably between an approach position, which is close to the device main body(16), and a separation position, which is horizontally separated from the device main body(16);
a nozzle(20) that is supported at a front side of the device main body(16) so as to be movable between a collection position, where the nozzle(20) enters the specimen container at the approach position from above to collect a specimen inside the specimen container, and a retraction position, where the nozzle retracts above the specimen container;
a cover(50) that covers the nozzle, at the retraction position, at the front side; and
a support member(46) that is provided at the holding member(18) so as to be positionally adjustable in a vertical direction and that supports the specimen container.

2. The analysis device(12) according to claim 1, further comprising a fixing member(52) that fixes the support member(46) at a predetermined vertical position.

3. The analysis device(12) according to claim 1 or 2, further comprising a guide member(60) that guides the support member(46) in the vertical direction with respect to the holding member(18).

4. The analysis device(12) according to claim 3, wherein the guide member(60) includes:
a long hole(58) that is formed in the holding member(18) along the vertical direction,
and
a male screw(56B) that is inserted into the long hole and screwed into the support member.

5. The analysis device(12) according to claim 2, wherein the fixing member(52) includes:
a male screw(56B) that is screwed into the support member(46), and
a clamping wall(34) that forms a part of the holding member(18) and that clamps the support member(46) between the clamping wall(34) and the male screw(56B).

6. The analysis device(12) according to any one of claim 1 to claim 5, wherein the support member has a support surface(48) that supports the specimen container and that is inclined downward toward a center.
